(19) **Europäisches Patentamt / European Patent Office / Office européen des brevets**

(11) **EP 2 066 523 B1**

(12) **EUROPEAN PATENT SPECIFICATION**

(45) Date of publication and mention
of the grant of the patent:
**22.06.2011 Bulletin 2011/25**

(51) Int Cl.:
**B60M 1/26** (2006.01)

(21) Application number: **07802361.1**

(22) Date of filing: **19.09.2007**

(86) International application number:
**PCT/EP2007/008151**

(87) International publication number:
**WO 2008/037386 (03.04.2008 Gazette 2008/14)**

(54) **DEVICE FOR COMPENSATING VARIATIONS IN THE LENGTH OF TENSIONED CABLES, WITH SUBSTANTIALLY CONSTANT TENSION**

VORRICHTUNG ZUM AUSGLEICH VON LÄNGENSCHWANKUNGEN VON GESPANNTEN KABELN MIT IM WESENTLICHEN KONSTANTER SPANNUNG

DISPOSITIF POUR COMPENSER LES VARIATIONS DE LONGUEUR DE CÂBLES TENDUS, AVEC UNE TENSION SENSIBLEMENT CONSTANTE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.09.2006 IT MI20061857**

(43) Date of publication of application:
**10.06.2009 Bulletin 2009/24**

(73) Proprietor: **Pfisterer S.r.l.**
**20017 Rho**
**Frazione Passirana (Milano) (IT)**

(72) Inventors:
• **CAPACCHIONE, Renato**
  **20024 Garbagnate Milanese (IT)**
• **MAGGI, Fiorino**
  **20090 Buccinasco (IT)**
• **FEMMINIS, Luciano**
  **20024 Garbagnate Milanese (IT)**

(74) Representative: **Modiano, Micaela Nadia et al**
**Dr. Modiano & Associati SpA**
**Via Meravigli 16**
**20123 Milano (IT)**

(56) References cited:
**WO-A-98/21794     BE-A- 409 675**
**GB-A- 289 805     JP-A- 63 277 928**

## Description

## Technical Field

The present invention relates to a device for compensating variations in the length of tensioned cables, with substantially constant tension.

## Background Art

As is known, the conductors of overhead power lines for distributing and carrying power or for railroad traction are installed with a very specific tension value which takes into account the ultimate tensile strength of the cables, the strength of the supporting structures and the requirements in terms of maximum sag at the center of the span.

The configuration assumed by the cable after tensioning is not constant and invariable over time but is closely dependent on the ambient temperature, since the material of which the cable is made, which can be copper or alloys thereof, aluminum or alloys thereof, steel or aluminum with a steel core, expands or contracts as the temperature increases or decreases.

This fact causes the sag in the middle of the span to increase or decrease. This variation in the sag of the span, traced by the cable owing to its own weight, cannot be tolerated in some applications owing to electrical and/or mechanical reasons.

The electrical reasons are given by the fact that at the increasing of sag, the insulation distances towards the surrounding parts, such as for example the ground, decrease. Moreover, the decrease in tensioning force caused by an elongation of the cable makes such cable more subject to oscillations and swaying caused by the wind, which can make the cable move dangerously close to other cables of different phases or to grounded parts.

The mechanical reasons can be seen typically in the catenary curve of electric contact lines of railroads. As is known, such lines are constituted usually by a supporting cable from which the contact wire is suspended; the pantograph of locomotives makes sliding contact with the underside of such wire to tap the current. The contact wire is supported by the supporting cable by means of so-called "droppers" placed at short preset distances, so that while the profile of the supporting cable has the typical sag, the profile of the contact wire remains significantly straight, so as to be practically horizontal, in order to allow correct sliding of the pantograph. A contraction of the supporting cable and/or of the contact wire, caused by thermal variations, can cause unacceptable stresses on such cables or on the supports and can cause abnormal lifting of the contact wire with respect to the rail level; such stresses and lifting could not be compatible with a correct collection of the current by the pantograph, in addition to causing abnormal wear of the contact wire. Likewise, an elongation of the supporting cable and/or of the contact wire, caused by thermal variations, can cause abnormal lowerings of the contact wire, equally causing problems in the correct collection of the current.

Different systems are used to compensate variations in the length of the cables as a consequence of temperature variations.

A first system is constituted by counterweighting and consists substantially in connecting one end of the cable, by means of pulleys, to a weight which corresponds to the tensioning force of the cable or is reduced as a function of the ratio of the pulley system. In this way, the tension of the cable remains unchanged as the length of the cable varies, since the installed weight is invariant. Such system, which is still the most widely used system today, suffers the drawback that it requires a large space occupation, which is not always compatible with the installation requirements, especially in the railroad field, such as for example in tunnels, where very often it is physically impossible to provide recesses into which the counterweights might slide, or in which it might be possible to provide recesses but at excessively high costs. Another drawback of such system is the high installation cost, caused mainly by the need to resort to auxiliary structures for supporting, guiding and protecting the counterweights.

Another system is based on the use of a gas-filled compensator. In such system, one end of the cable is connected to a device which comprises a spring/damper unit with compressed gas, usually nitrogen; such unit provides a significantly constant load. This system has the advantage, with respect to counterweighting, of requiring a reduced space occupation for its installation, but it is not free from drawbacks, since problems are observed a few years after the first installations, mainly in relation to the loss of gas from the unit, thereby requiring continuous monitoring and maintenance. The cost of this device is also high and restricts its use to particular cases.

Compensators are also known which are actuated by an electric motor and are substantially constituted by a device having a sensor for detecting variations in the length of the cable caused by thermal variations, which drives an electric motor which in turn actuates a rod connected to the cable to be tensioned. This system, too, is not free from drawbacks, since it has a high cost, caused also by the need to install an electrical power supply and control panel and by the need to have a low-voltage electric power source, which is not always available or at least not available inexpensively.

Another compensation system is constituted by a simple spring compensator. This system substantially uses a helical spring which "damps" the mechanical effects caused by the expansion or contraction of the cable, but is unable to keep the tension of the cable constant due to the characteristic of the spring of varying the load in proportion to the stroke.

In order to solve the above problems, a compensator has been proposed which is disclosed in WO 98/21794 A, to which reference is made for the sake of completeness and in which the contrast element is constituted by a helical spring which is connected to the cable to be tensioned by means of one or more variable-radius pulleys in order to convert the elastic reaction of the helical spring, which is typically variable as a function of its length variation, into a substantially constant tension applied to the cable to be tensioned.

Over time, this compensator has proved to be susceptible of improvements aimed mainly at reducing the overall space occupation of the compensator and at simplifying its structure.

## Disclosure of the Invention

The aim of the present invention is to provide a device for compensating length variations in tensioned cables, with substantially constant tension, which can maintain the advantages achieved by the compensation device according to WO 98/21794 A and can have a reduced overall space occupation.

Within this aim, an object of the invention is to provide a device which allows to reduce friction losses in transmitting the tension to the cable so as to achieve higher precision in the tension value applied to the cable.

Another object of the invention is to provide a compensator which is composed of a reduced number of elements which are simple and quick to assemble.

Another object of the invention is to provide a compensator which ensures a substantially constant tension of the tensioned cable.

In accordance with the invention, there is provided a device for compensating length variations of tensioned cables as defined in the appended claims.

## Brief description of the drawings

Further characteristics and advantages of the invention will become better apparent from the description of two preferred but not exclusive embodiments of the device according to the invention, illustrated by way of non-limiting example in the accompanying drawings, wherein:

Figures 1 to 3 are views of the device according to the invention in a first embodiment, and more particularly:

Figure 1 is a perspective view of two devices according to the invention applied to a supporting pole;

Figure 2 is an enlarged-scale view of a detail of Figure 1, with one of the two devices shown partially in exploded view;

Figure 3 is a view of the same detail of Figure 2, seen from a different angle;

Figures 4 to 8 illustrate the device according to the invention in a second embodiment, and more particularly:

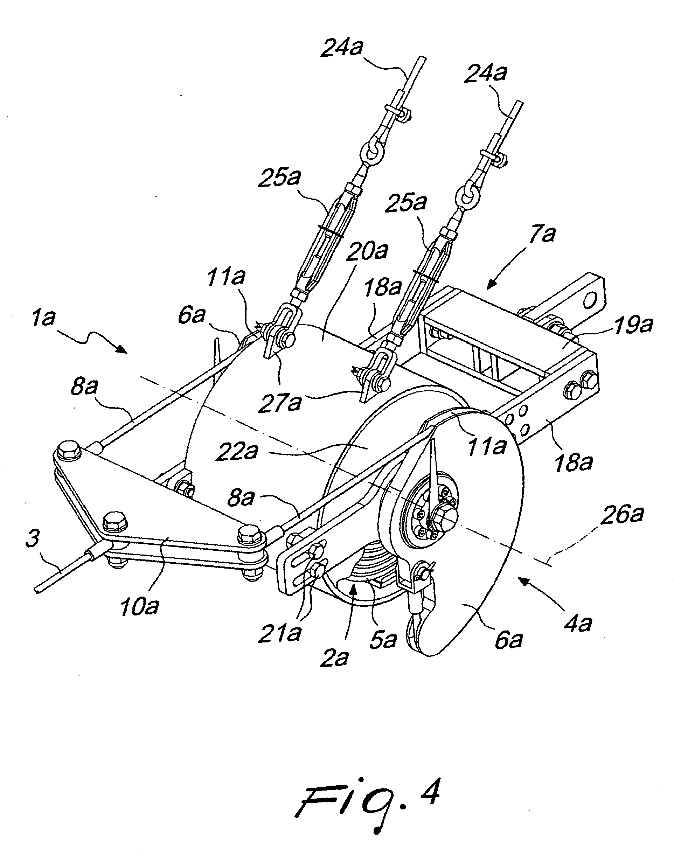

Figure 4 is a perspective view of the device;

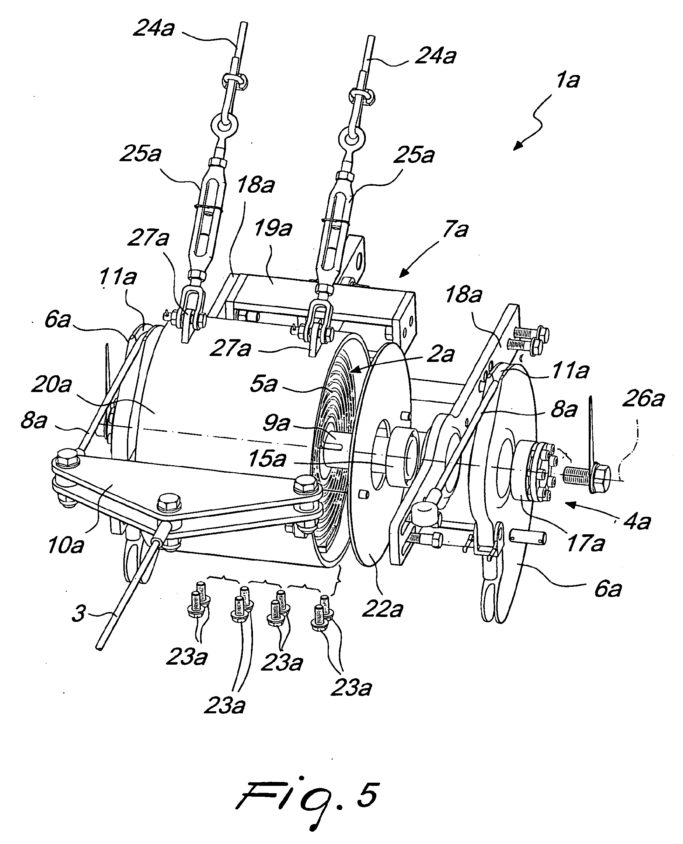

Figure 5 is a partially exploded perspective view of the device;

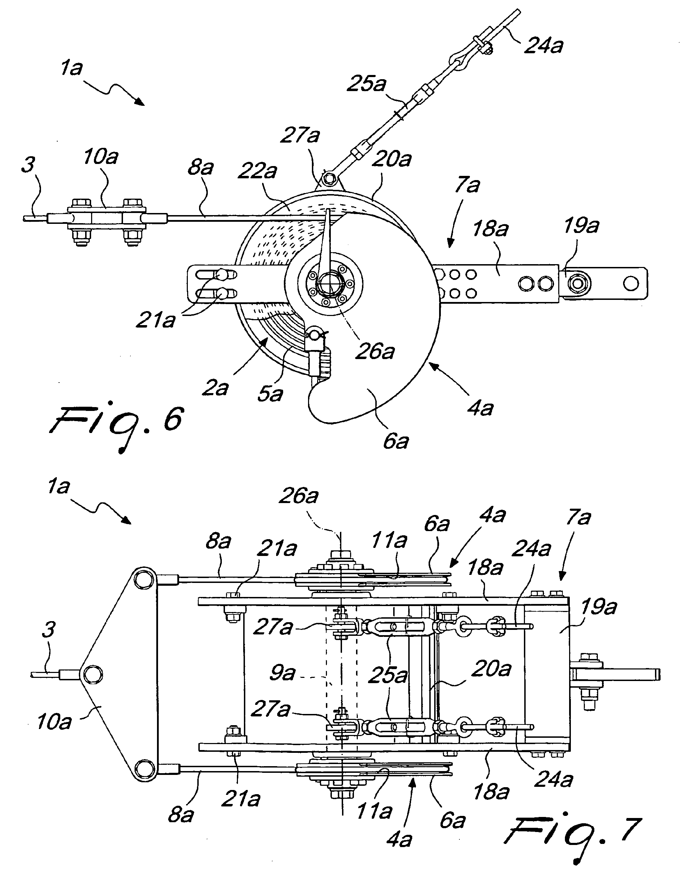

Figure 6 is a side elevation view of the device of Figure 4;

Figure 7 is a top plan view of the device;

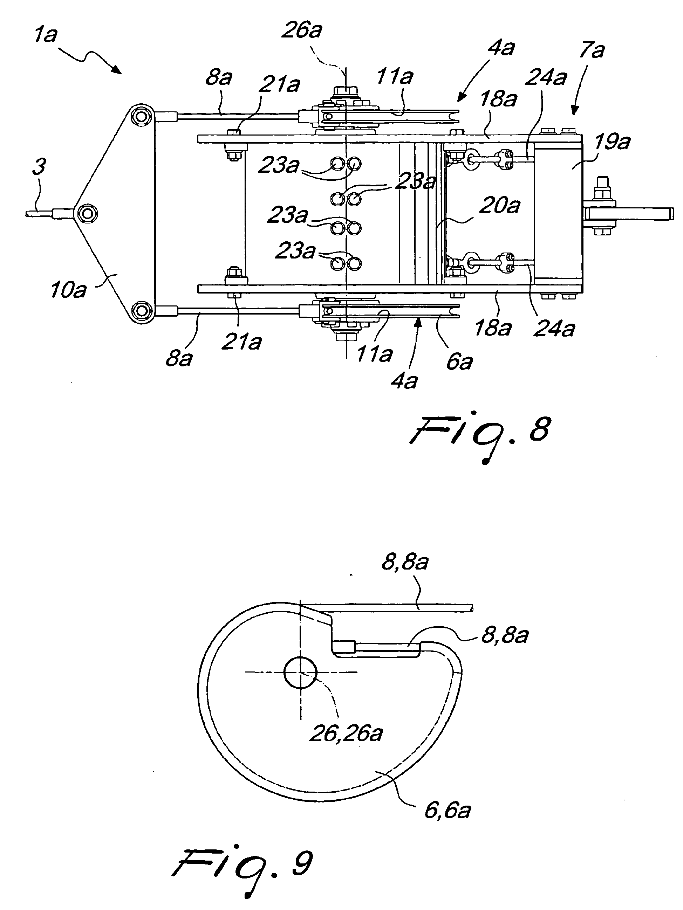

Figure 8 is a bottom plan view of the device;

Figure 9 is a schematic view of a variable-radius pulley of the device according to the invention, in the first embodiment, in a side elevation view in the condition of maximum elongation of the tensioned cable;

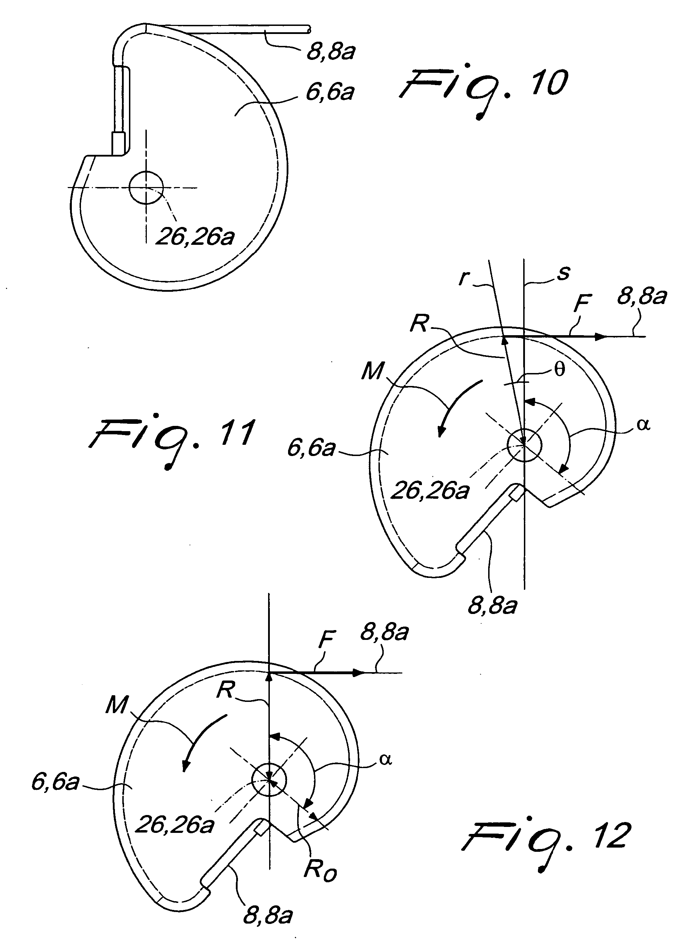

Figure 10 is a schematic side elevation view of a variable-radius pulley of the device according to the invention in the first embodiment, in the condition of maximum contraction of the tensioned cable;

Figure 11 is a schematic view of a variable-radius pulley of the device according to the invention, in the first embodiment in a side elevation view, in an intermediate condition of operation, indicating the forces and torques which act thereon;

Figure 12 is a view of a possible approximation of the operating condition, shown schematically in Figure 11.

## Ways of carrying out the Invention

With reference to the figures, the device according to the invention, generally designated in the two embodiments by the reference numerals 1, 1a, comprises a contrast element 2, 2a, which is designed to be interposed between one end of the tensioned cable 3 and an anchoring element which can be constituted by an anchoring pole or by another fixed installation. The contrast element 2, 2a is adapted to generate an elastic reaction which is variable as a function of the variation of the length of the cable 3. The device further comprises connection means 4, 4a for connecting the contrast element 2, 2a to the cable 3, and said connection means are adapted to convert the elastic reaction of the contrast element 2, 2a into a substantially constant tension applied to the cable 3 regardless of its length, within a preset length variation interval.

According to the invention, the contrast element 2, 2a comprises at least one spiral spring 5, 5a which, as such, produces an elastic reaction M which is variable as a function of the length variations of the cable 3 but which, thanks to the connecting means 4, 4a, ensures substantially constant tension T of the cable 3.

Preferably, the connection means 4, 4a comprise at least one variable-radius pulley 6, 6a which is supported, so that it can rotate about its own rotation axis 26, 26a, by a supporting structure 7, 7a. The cable 3 can be connected, with one of its ends, to the variable-radius pulley 6, 6a directly or, as shown, by means of at least one wire-like element 8, 8a. The cable 3 or the wire-like element 8, 8a can be wound onto the variable-radius pulley 6, 6a and the spiral spring 5, 5a is connected, with one of its ends, to the variable-radius pulley 6, 6a so as to contrast its rotation about the axis 26, 26a in the direction of rotation which unwinds the cable 3 or the wire-like element 8, 8a from the variable-radius pulley 6, 6a.

Preferably, the spiral spring 5, 5a is arranged around the rotation axis 26, 26a of the variable-radius pulley 6, 6a and is fixed, by means of one of its ends, to the variable-radius pulley 6, 6a and, by means of its other end, to the supporting structure 7, 7a.

More particularly, the variable-radius pulley 6, 6a is keyed onto a shaft 9, 9a, which is supported by the supporting structure 7, 7a so that it can rotate about its own axis, which defines the rotation axis 26, 26a of the variable-radius pulley 6, 6a, and the spiral spring 5, 5a is arranged around the shaft 9, 9a and is fixed with one of its ends to the shaft 9, 9a and with its other end to the supporting structure 7, 7a.

Advantageously, the supporting structure 7, 7a and the shaft 9, 9a allow to keep constant the distance between the ends of the spiral spring 5, 5a while allowing one end of the spiral spring 5, 5a to vary its angular position about the rotation axis 26, 26a with respect to the other end.

The variable-radius pulley 6, 6a has a radius R which increases as the winding angle of the cable 3 or of the wire-like element 8, 8a on the variable-radius pulley 6, 6a decreases, so that the variation of the elastic reaction M, generated by the spiral spring 5, 5a as a consequence of the rotation of the variable-radius pulley 6, 6a generated by the winding or unwinding of the cable 3 or of the wire-like element 8, 8a, is transmitted to the cable 3 in the form of a tension T which remains substantially constant as the winding angle varies.

Depending on the requirements, the device according to the invention can have one or more variable-radius pulleys 6, 6a and/or one or more spiral springs 5, 5a.

In practice, in the configuration described above and assuming that the contrast element 2, 2a is constituted by a single spiral spring 5, 5a and that the connecting means 4, 4a are constituted by a single variable-radius pulley 6, 6a, the radius R of the variable-radius pulley 6, 6a is such as to satisfy the following relation:

$$T \cdot R \cos\theta = M$$

i.e.

$$T \cdot R \cos\theta = M_0 + K \cdot \alpha$$

where T is the tension to be transmitted to the cable 3, M is the torque generated by the elastic reaction of the spiral spring 5, 5a, $M_0$ is the preloading of the spiral spring 5, 5a, K is the elastic constant of the spiral spring 5, 5a, $\theta$ is the center angle between the straight line r, which passes through the center of the pulley 6, 6a and through the point of tangency or of first contact of the cable 3 or of the wire-like element 8, 8a with the pulley 6, 6a and the straight line s, which passes through the center of the pulley 6, 6a and at right angles to the cable 3 or to the wire-like element 8, 8a, and $\alpha$ is the angle of rotation of the variable-radius pulley 6, 6a, measured starting from the condition of maximum winding of the cable 3 or wire-like element 8, 8a on said variable-radius pulley 6, 6a according to the diagram shown in Figure 11.

The radius R can be calculated approximately on the basis of the diagram shown in Figure 12, assuming that the point of tangency or first contact of the cable 3 or of the wire-like element 8, 8a is aligned vertically with the center of the variable-radius pulley 6, 6a, i.e., $\cos\theta = 1$.

With this assumption, which leads to a result with modest variations of the tension T applied to the cable 3, which is in any case capable of satisfying the requirements in most applications intended for the device according to the invention, the following holds:

$$R = (M_0 + K \cdot \alpha)/T$$

where T is the tension to be transmitted to the cable 3, $M_0$ is the preloading of the spiral spring 5, 5a, K is the elastic constant of the spiral spring 5, 5a, and $\alpha$ is the angle of rotation of the variable-radius pulley 6, 6a, measured starting from the condition of maximum winding of the cable 3 or of the wire-like element 8, 8a on said variable-radius pulley 6, 6a. The preloading $M_0$ of the spiral spring 5, 5a in this approximate calculation is equal to T $\cdot$ $R_0$, where $R_0$ is the minimum radius of the pulley 6, 6a in the condition of maximum winding ($\alpha = 0$) of the cable 3 or of the wire-like element 8, 8a on said pulley 6, 6a, to be preset as a function of the maximum elongation of the cable 3 to be compensated and of the chosen geometry of the device in accordance with its installation requirements.

If the contrast element 2, 2a is constituted by n spiral springs arranged around the shaft 9, 9a and connected in parallel (i.e., with each spiral spring 5, 5a fixed to the shaft 9, 9a with one of its ends and to the supporting structure 7, 7a with its other end) to a variable-radius pulley 6, 6a, the following again holds:

$$T \cdot R \cos\theta = M$$

where, however, M is the sum of the elastic reactions of the several spiral springs 5, 5a. If the several spiral springs 5, 5a are mutually identical with an elastic constant K, one has:

$$T \cdot R \cos\theta = n \cdot (M_0 + K \cdot \alpha)$$

where $M_0$ is the preloading of each individual spiral spring 5, 5a.

In this case, the approximate calculation of the radius R of the variable-radius pulley becomes:

$$R = n \cdot (M_0 + K \cdot \alpha)/T.$$

If the connection means 4, 4a are constituted by N coaxial twin pulleys 6, 6a which are keyed to the same shaft 9, 9a and are connected to the cable 3 to be tensioned by means of respective wire-like elements 8, 8a, each of which can be wound onto a corresponding variable-radius pulley 6, 6a, the radius R of each pulley 6, 6a is such as to satisfy the following relation:

$$F \cdot R \cos\theta = M$$

where F is the force transmitted by each wire-like element 8, 8a to the cable 3 in order to obtain the chosen tension T, i.e., $F \cdot N = T$, M is the torque generated by the elastic reaction of the spiral spring 5, 5a, or on the whole, by the spiral springs, and the other terms of the relation have the same meaning already explained earlier.

In this case, the approximate calculation of the radius R of the variable-radius pulley 6, 6a is expressed by the following function:

$$R = n \cdot (M_0 + K \cdot \alpha)/F$$

where the different terms of the function have the same meaning already explained previously.

Substantially, ifN coaxial twin pulleys 6, 6a are used which are keyed on a same shaft 9, 9a and are connected to the cable 3 to be tensioned by means of a corresponding wire-like element 8, 8a which can be wound onto the corresponding pulley 6, 6a, and n spiral springs 5, 5a are used which are arranged around the shaft 9, 9a and are connected in parallel to the variable-radius pulleys 6, 6a, the radius R of each variable-radius pulley 6, 6a can be calculated approximately from the following relation:

$$R = \frac{\sum_{i=1}^{i=n} (M_{0i} + K_i\alpha)}{F}$$

where:

R is the radius of the variable-radius pulley 6, 6a;
F is the force to be transmitted to the cable 3 for its tensioning, such that $N \cdot F = T$;
T is the tension to be applied to the cable 3;
$M_{0i}$ is the preloading of the i-th spiral spring 5, 5a;
$K_i$ is the elastic constant of the i-th spiral spring 5, 5a;
$\alpha$ is the angle of rotation of the variable-radius pulleys 6, 6a, measured starting from the condition of maximum winding of each wire-like element 8, 8a on the corresponding variable-radius pulley 6, 6a.

If the n spiral springs are mutually identical, one obtains:

$$R = n \cdot (M_0 + K \cdot \alpha)/F$$

where:

R is the radius of the variable-radius pulley 6, 6a;
F is the force to be transmitted to the cable 3 for its tension, such that $N \cdot F = T$;
T is the tension to be applied to the cable 3;
$M_0$ is the preloading of each spiral spring 5, 5a;
K is the elastic constant of each spiral spring 5, 5a;
$\alpha$ is the angle of rotation of the variable-radius pulleys 6, 6a, measured starting from the condition of maximum winding of each wire-like element 8, 8a on the corresponding variable-radius pulley 6, 6a.

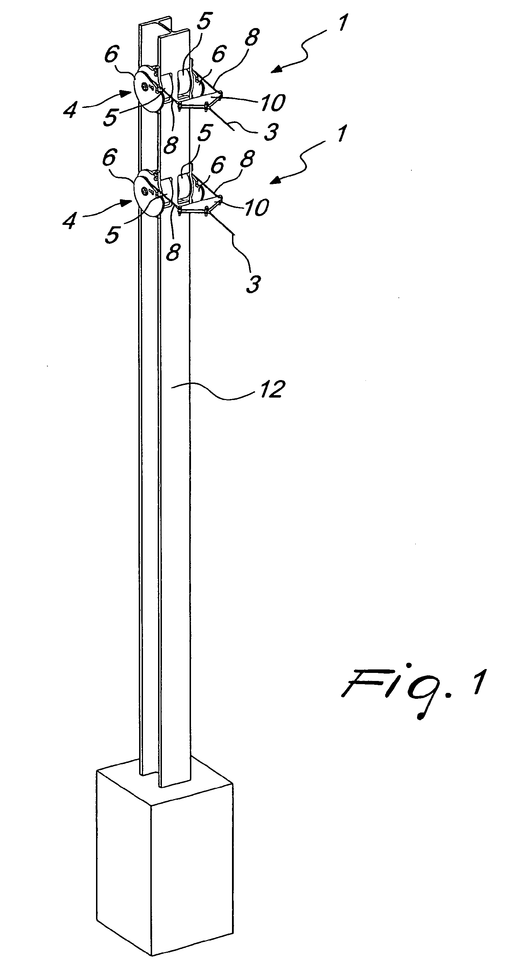

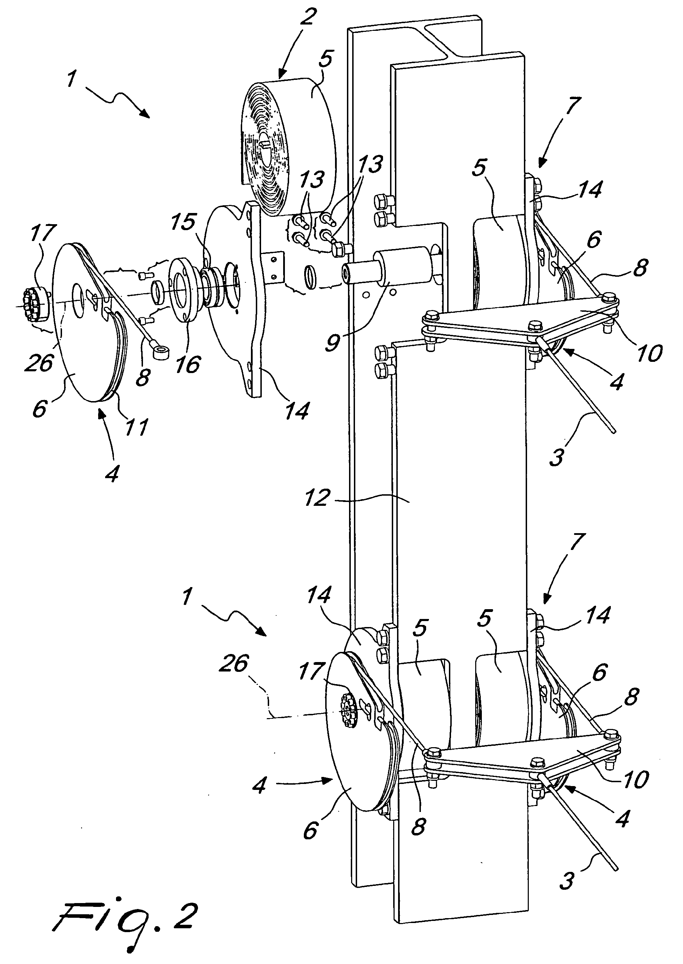

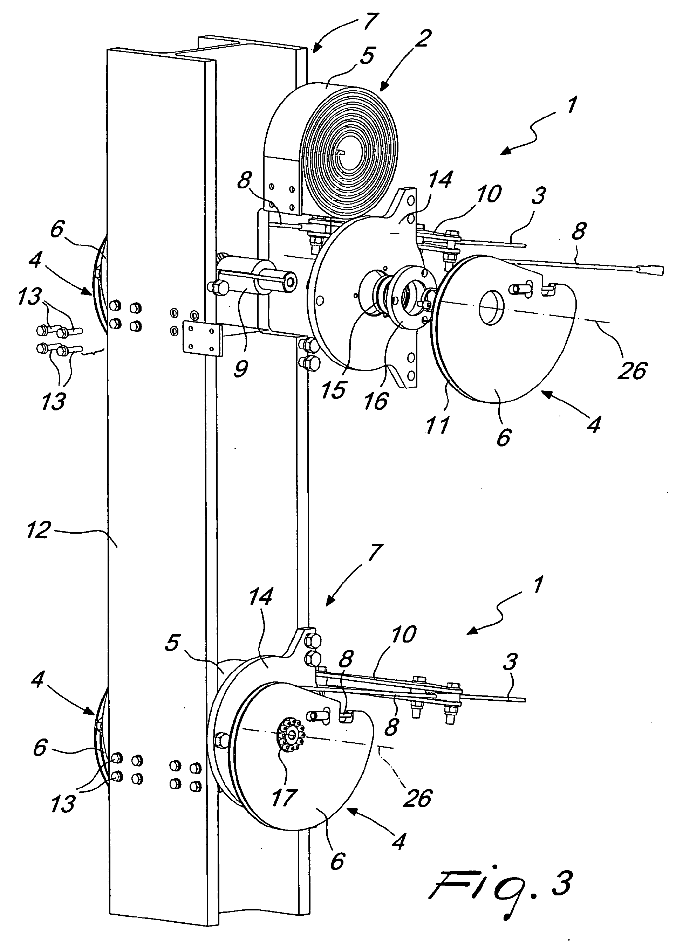

In the first embodiment, shown in Figures 1 to 3 and shown schematically in Figures 9 to 12, the maximum angle of rotation of the variable-radius pulley 6, 6a is equal to 270°, whereas in the second embodiment, shown in Figures 4 to 8, the maximum rotation angle is 180°, but the width of such angle can vary according to the requirements. It should be noted that the maximum rotation angle of the variable-radius pulley may also be greater than 360° by providing a pulley with races 11, 11a which are arranged in a helical shape around its rotation axis 26, 26a.

In the illustrated embodiments, in order to achieve centering of the tension applied to the cable 3 and of the forces discharged onto the supporting structure 7, 7a, there is a pair of variable-radius twin pulleys, both designated by the reference numeral 6 in the first embodiment and by the reference numeral 6a in the second embodiment, which are keyed to the shaft 9, 9a and are arranged symmetrically, laterally and on mutually opposite sides with respect to the vertical plane that contains the cable 3. The cable 3 is connected by one of its ends to such pulleys by means of a pair of wire-like elements 8, 8a, each of which is fixed to one of the variable-radius pulleys 6, 6a and can be wound onto it. The pair of wire-like elements 8, 8a is connected to the cable 3 by means of a triangular plate 10, 10a.

If, as shown, the device uses two variable-radius pulleys 6, 6a connected to the cable 3, the elastic reaction M generated by the spiral spring or springs 5, 5a is divided among the two variable-radius pulleys 6, 6a and the force F transmitted through each wire-like element 8, 8a to the cable 3 is equal to half the tension T to be applied to the cable 3.

Each of the variable-radius pulleys 6, 6a has a perimetric race 11, 11a for containing the portion of the cable or of the wire-like element 8, 8a that is wound on it.

Preferably, in the first embodiment, there is a pair of twin spiral springs 5, which are arranged around the shaft 9 and are fixed with one of their ends to the shaft 9 and with their other end to the supporting structure 7. In this case, the torque M, generated by the elastic reaction of the spiral springs 5, which acts as a whole on the two variable-radius pulleys 6, is equal to twice the torque generated by the elastic reaction of each of the spiral springs 5.

In this first embodiment of the device, shown in Figures 1 to 3, the supporting structure is constituted by a pole 12 or beam and the spiral springs 5 are accommodated in the pole 12 or beam and fixed by one of their ends to such pole, for example by screws 13.

The device according to the invention, in this embodiment, is completed by fixing plates 14, which are fixed to the pole 12 and are crossed by the shaft 9, and by bearings 15 for supporting the shaft 9, which are mounted in supports 16 which are fixed to the fixing plates 14.

The variable-radius pulleys 6 are fixed to the axial ends of the shaft 9 by means of respective fixing bushes 17.

In the second embodiment, shown in Figures 4 to 8, there is a single spiral spring 5a, which is arranged around the shaft 9a between the two twin variable-radius pulleys 6a, which are fixed to the axial ends of the shaft 9a by means of respective fixing bushes 17a.

In such second embodiment, the supporting structure 7a is constituted by plate-like elements, which are assembled together in a bracket-like configuration with two arms 18a which are joined to each other by a cross-member 19a and support, so that it can rotate about its own axis 26a, the shaft 9a by means of bearings 15a.

The cross-member 19a can be engaged in a per se known manner to a pole, wall or other fixed anchoring element of a known type.

The spiral spring 5a is contained in an enclosure which is fixed, for example by means of bolts 21a, to the arms 18a of the supporting structure 7a and is composed of a hollow cylinder 20a which is closed, at its ends, by lids 22a. The end of the spiral spring 5a that lies opposite the one fixed to the shaft 9a is fixed to the internal surface of the hollow cylinder 20a for example by means of screws 23a.

The engagement of the supporting structure 7a with the pole, wall or anchoring element of a known type can be completed by two tension elements 24a with corresponding tensioning devices 25a which are connected with one of their ends to the pole, wall or anchoring element and with their other end to a pair of lugs 27a provided for this purpose on the outer surface of the hollow cylinder 20a.

The spiral spring 5a can be preloaded in a per se known manner. In particular, in the second embodiment, the preloading of the spiral spring 5a can be performed starting with the spiral spring 5a completely unloaded, by turning the shaft 9a about the axis 26a with respect to the supporting structure 7a so as to progressively load the spiral spring 5a until it reaches a preset torque $M_0$. At this point, the variable-radius pulley 6a is coupled and fixed to the shaft 9a so as to be in the condition in which $\alpha = 0°$. The variable-radius pulley 6a is then locked, by means of a mechanical retainer, with respect to the supporting structure 7a so that it cannot rotate in one direction due to the action of the spiral spring 5a but can instead turn in the opposite direction in contrast with the action of the spiral spring 5a. The locking condition of the variable-radius pulley 6a corresponds to the rotation angle $\alpha = 0°$.

Operation of the device according to the invention is as follows.

For the sake of simplicity, operation of the device is described assuming that, instead of a pair of variable-radius twin pulleys 6, 6a, the device has a single variable-radius pulley 6, 6a and a single spiral spring 5, 5a.

A contraction of the cable 3, by causing a rotation of the variable-radius pulley 6, 6a about its own axis 26, 26a in the direction of rotation that causes a reduction of the winding angle of the cable 3 or of the wire-like element 8, 8a on the pulley 6, 6a, increases the elastic reaction of the spiral spring 5, 5a, while an elongation of the cable 3, by causing a rotation of the variable-radius pulley 6, 6a about its own axis 26, 26a in the opposite direction, i.e., in the direction of rotation which causes an increase in the winding angle of the cable 3 or of the wire-like element 8, 8a on the pulley 6, 6a, reduces the elastic reaction of the spiral spring 5, 5a. Despite the variability of the elastic reaction of the spiral spring 5, 5a, thanks to the geometry of the variable-radius pulley 6, 6a, the tension T applied to the cable 3 is kept substantially constant.

In practice it has been found that the device according to the invention fully achieves the intended aim, since it is capable of compensating for variations of the length of tensioned cables by maintaining on the cable a substantially constant tension and with a limited space occupation which makes it particularly simple and easy to install it even in tight spaces.

The terms "substantially constant" are intended to mean that the tension maintained on the cable, even if great variations in the operation conditions, such as temperature, occur, is always kept at that constant value that is suitable to prevent exceeding of the maximum allowable sag.

Another advantage of the device according to the invention, which arises from the fact that the spiral spring or springs does/do not require guiding elements, is that it avoids friction losses due to such guiding elements in the transmission of the tension to the cable and therefore it ensures higher precision in the value of the tension applied to the cable.

The device thus conceived is susceptible of numerous modifications and variations, all of which are within the scope of the appended claims; all the details may further be replaced with other technically equivalent elements.

In practice, the materials used, as well as the dimensions, may be any according to requirements and to the state of the art.

The disclosures in Italian Patent Application No. MI2006A001857 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

**Claims**

1. A device for compensating variations in the length of tensioned cables, with substantially constant tension, comprising a contrast element (2,2a) which is suitable to be interposed between one end of the tensioned cable (3) and an anchoring element and is adapted to generate an elastic reaction which can vary as a function of the length variation of the tensioned cable (3), connection means (4,4a) being provided for connecting said contrast element (2,2a) to said tensioned cable (3), said connection means (4,4a) being adapted to convert the elastic reaction of said contrast element (2,2a) into a substantially constant tension applied to said tensioned cable (3), regardless of its length, over a preset length variation range, said connection means (4,4a) comprising at least one variable-radius pulley (6,6a) which is supported so that it can rotate about its own axis (26,26a) by a supporting structure (7,7a), said tensioned cable (3) being connected with one of its ends, directly or by means of a wire-like element (8,8a), to said variable-radius pulley (6,6a), said tensioned cable (3) or said wire-like element (8,8a) being windable onto said variable-radius pulley (6,6a), **characterized in that** said contrast element (2,2a) comprises at least one spiral spring (5,5a), and said at least one spiral spring (5,5a) being connected, with one of its ends, to said variable-radius pulley (6,6a) in order to contrast its rotation in the direction which unwinds said tensioned cable (3) or said wire-like element (8,8a) from said variable-radius pulley (6,6a) and, with its other end, to said supporting structure (7,7a).

2. The device according to claim 1, **characterized in that** said at least one spiral spring (5,5a) is arranged around the rotation axis (26,26a) of said at least one variable-radius pulley (6,6a) and is fixed, with one of its ends, to said variable-radius pulley (6,6a) and, with its other end, to said supporting structure (7,7a).

3. The device according to one or more of the preceding claims, **characterized in that** said variable-radius pulley (6,6a) is keyed on a shaft (9,9a) which is supported so that it can rotate about its axis (26,26a) by said supporting structure (7,7a) and defines, with its axis, the axis of rotation of the variable-radius pulley (6,6a); said
spiral spring (5,5a) being arranged around said shaft (9,9a) and being fixed, with one of its ends, to said shaft (9,9a) and, with its other end, to said supporting structure (7,7a).

4. The device according to one or more of the preceding claims, **characterized in that** said supporting structure (7,7a) and said shaft (9,9a) are adapted to keep constant the distance between the ends of said at least one spiral spring (5,5a) while allowing one end of the at least one spiral spring (5,5a) to vary its angular position about the axis (26,26a) of said shaft (9,9a) with respect to the other end.

5. The device according to one or more of the preceding claims, **characterized in that** said at least one variable-radius pulley (6,6a) is provided perimetrically with a race (11,11a) for containing said tensioned cable (3) or said wire-like element (8,8a).

6. The device according to one or more of the preceding claims, **characterized in that** said variable-radius pulley (6,6a) has a radius (R) which increases as the winding angle of said tensioned cable (3) or of said wire-like element (8,8a) on said variable-radius pulley (6,6a) decreases.

**7.** The device according to one or more of the preceding claims, **characterized in that** if a single pulley (6,6a) is used which is connected to the cable (3) to be tensioned directly or by way of a wire-like element (8,8a) which can be wound onto the pulley (6,6a), and a single spiral spring (5,5a) is used which is arranged around the axis of rotation of the variable-radius pulley (6,6a) and is connected to the variable-radius pulley (6,6a), the radius (R) of said at least one variable-radius pulley (6,6a) is expressed by the following relation:

$$R = (M_0 + K \cdot \alpha)/T$$

where:

R is the radius of the variable-radius pulley;
T is the tension to be transmitted to the cable in order to tension it;
$M_0$ is the preloading of the spiral spring;
K is the elastic constant of the spiral spring;
$\alpha$ is the angle of rotation of the variable-radius pulley, measured starting from the condition of maximum winding of the cable or wire-like element on said variable-radius pulley (6,6a).

**8.** The device according to one or more of the preceding claims, **characterized in that** if N coaxial twin pulleys (6,6a) are used which are keyed on a same shaft (9,9a) and are connected to the cable (3) to be tensioned by way of a corresponding wire-like element (8,8a) which can be wound onto the corresponding pulley (6,6a) and n spiral springs (5,5a) are used which are arranged around the axis of rotation of the variable-radius pulleys (6,6a) and are connected in parallel to the variable-radius pulleys, the radius (R) of each variable-radius pulley (6,6a) is expressed by the following relation:

$$R = \frac{\sum_{i=1}^{i=n} (M_{0i} + K_i \alpha)}{F}$$

where:

R is the radius of the variable-radius pulley;
F is the force to be transmitted to the cable for its tensioning, such that $N \cdot F = T$;
T is the tension to be applied to the cable;
$M_{0i}$ is the preloading of the i-th spiral spring;
$K_i$ is the elastic constant of the i-th spiral spring;

$\alpha$ is the angle of rotation of the variable-radius pulleys, measured starting from the condition of maximum winding of each wire-like element on the corresponding variable-radius pulley.

**9.** The device according to one or more of the preceding claims, **characterized in that** it comprises a pair of twin variable-radius pulleys (6,6a) which are keyed onto said shaft (9,9a) and are arranged symmetrically, laterally and on mutually opposite sides with respect to the vertical plane that contains said tensioned cable (3); said tensioned cable (3) being connected, with one of its ends, to a pair of wire-like elements (8,8a), each of which is fixed to one of said variable-radius pulleys (6,6a) and can be wound onto the corresponding variable-radius pulley (6,6a).

**10.** The device according to one or more of the preceding claims, **characterized in that** it comprises two twin spiral springs (5), which are arranged around the axis of rotation of said at least one variable-radius pulley (6,6a) and are connected in parallel to said at least one variable-radius pulley in order to contrast the rotation of said at least one variable-radius pulley (6,6a) in the direction of rotation which produces the unwinding of the cable (3) or of the corresponding wire-like element (8,8a).

**11.** The device according to one or more of the preceding claims, **characterized in that** said at least one spiral spring (5) comprises a spiral spring which is arranged around said shaft (9) between said pair of twin variable-radius pulleys (6) fixed to the axial ends of said shaft (9).

**12.** The device according to one or more of the preceding claims, **characterized in that** said supporting structure (7) is constituted by a pole (12) or beam.

**13.** The device according to claim 11, **characterized in that** said at least one spiral spring (5) is at least partially accommodated within said pole (12) or beam.

**14.** The device according to one or more of the preceding claims, **characterized in that** said supporting structure (7a) is constituted by plate-like elements which are mutually assembled in a bracket-like configuration with two arms (18a) which are joined to each other by a cross-member (19a) and support said shaft (9a) so that it can rotate about its own axis (26a).

**15.** The device according to claim 14, **characterized in that** said supporting structure (7a) can be engaged with a pole, wall or other fixed anchoring element of a known type.

**16.** The device according to one or more of the preceding claims, **characterized in that** said at least one spiral spring (5a) is surrounded by an enclosure which is fixed to said supporting structure (7a); said spiral spring (5a) being fixed by one of its ends to said enclosure.

**Patentansprüche**

**1.** Vorrichtung zum Ausgleich von Längenschwankungen von gespannten Kabeln, mit im wesentlichen konstanter Spannung, mit einem Gegenwirkungselement (2, 2a), das zwischen einem Ende des gespannten Kabels (3) und einem Verankerungs-element einschaltbar und befähigt ist, eine elastische Reaktion zu erzeugen, die sich in Abhängigkeit der Längenschwankungen des gespannten Kabels (3) verändern kann, wobei Verbindungsmittel (4, 4a) vorgesehen sind, um das Gegenwirkungselement (2, 2a) mit dem gespannten Kabel (3) zu verbinden, wobei die Verbindungsmittel (4, 4a) so ausgebildet sind, daß sie die elastische Reaktion des Gegenwirkungselementes (2, 2a) in eine im wesentlichen konstante Spannung umwandeln, die auf das gespannte Kabel (3) unabhängig von dessen Länge über einen voreingestellten Längenschwankungsbereich aufgebracht wird, wobei die Verbindungsmittel (4, 4a) zumindest eine Scheibe (6, 6a) mit variablem Radius aufweisen, die so abgestützt ist, daß sie um ihre eigene Achse (26, 26a) in einer Tragstruktur (7, 7a) drehen kann, wobei das gespannte Kabel (3) mit einem seiner Enden direkt oder über ein drahtartiges Element (8, 8a) mit der Scheibe (6, 6a) mit variablem Radius verbindbar ist, wobei das gespannte Kabel (3) oder das drahtartige Element (8, 8a) auf die Scheibe (6, 6a) mit variablem Radius aufwickelbar ist, **dadurch gekennzeichnet, daß** das Gegenwirkungselement (2, 2a) zumindest eine Spiralfeder (5, 5a) aufweist, und daß die zumindest eine Spiralfeder (5, 5a) mit einem ihrer Enden mit der Scheibe (6, 6a) mit variablem Radius verbindbar ist, um ihrer Drehung in der Richtung entgegenzuwirken, in welcher das gespannte Kabel (3) oder das drahtartige Element (8, 8a) von der Scheibe (6, 6a) mit variablem Radius abgewickelt wird, und mit seinem anderen Ende mit der Tragstruktur (7, 7a).

**2.** Vorrichtung nach Anspruch 1, **dadurch gekennzeichnet, daß** die zumindest eine Spiralfeder (5, 5a) um die Drehachse (26, 26a) der zumindest einen Scheibe (6, 6a) mit variablem Radius herum angeordnet ist, wobei sie mit einem ihrer Enden an der Scheibe (6, 6a) mit variablem Radius und mit ihrem anderen Ende an der Tragstruktur (7, 7a) fixiert ist.

**3.** Vorrichtung nach einem oder mehreren der vorhergehenden Ansprüche, **dadurch gekennzeichnet,** daß die Scheibe (6, 6a) mit variablem Radius auf eine Welle (9, 9a) aufgekeilt ist, die mit Hilfe der Tragstruktur (7, 7a) so abgestützt ist, daß sie um ihre Achse (26, 26a) drehen kann und mit ihrer Achse die Drehachse der Scheibe (6, 6a) mit variablem Radius definiert; wobei die Spiralfeder (5, 5a) um die Welle (9, 9a) herum angeordnet ist, wobei sie mit einem ihrer Enden an der Welle (9, 9a) und mit dem anderen Ende an der Tragstruktur (7, 7a) fixiert ist.

**4.** Vorrichtung nach einem oder mehreren der vorhergehenden Ansprüche, **dadurch gekennzeichnet, daß** die Tragstruktur (7, 7a) und die Welle (9, 9a) so ausgebildet sind, daß sie einen konstanten Abstand zwischen den Enden der zumindest einen Spiralfeder (5, 5a) aufrechterhalten, während sie gestatten, daß ein Ende der zumindest einen Spiralfeder (5, 5a) seine Winkelposition um die Achse (26, 26a) der Welle (9, 9a) bezüglich des anderen Endes variiert.

**5.** Vorrichtung nach einem oder mehreren der vorhergehenden Ansprüche, **dadurch gekennzeichnet, daß** die zumindest eine Scheibe (6, 6a) mit variablem Radius umfangsmäßig mit einer Bahn (11, 11a) versehen ist, um das gespannte Kabel (3) oder das drahtartige Element (8, 8a) aufzunehmen.

**6.** Vorrichtung nach einem oder mehreren der vorhergehenden Ansprüche, **dadurch gekennzeichnet, daß** die Scheibe (6, 6a) mit variablem Radius einen Radius (R) hat, der zunimmt, wenn der Wicklungswinkel des gespannten Kabels (3) oder des drahtartigen Elementes (8, 8a) auf der Scheibe (6, 6a) mit variablem Radius abnimmt.

**7.** Vorrichtung nach einem oder mehreren der vorhergehenden Ansprüche, **dadurch gekennzeichnet, daß** bei Verwendung einer einzigen Scheibe (6, 6a), die mit dem zu spannenden Kabel (3) direkt oder über ein drahtartiges Element (8, 8a) verbunden ist, welches auf die Scheibe (6, 6a) aufgewickelt werden kann, und bei Verwendung einer einzigen Spiralfeder (5, 5a), die um die Drehachse der Scheibe (6, 6a) mit variablem Radius herum angeordnet und mit der Scheibe (6, 6a) mit variablem Radius verbunden ist, der Radius (R) der zumindest einen Scheibe (6, 6a) mit variablem Radius durch die folgende Gleichung ausgedrückt wird:

$$R = (M_0 + K \cdot \alpha)/T$$

worin:

R der Radius der Scheibe mit variablem Radius ist;
T die auf das Kabel zu übertragende Spannung ist, um es zu spannen;

$M_0$ die Vorspannung der Spiralfeder ist;

K die Elastizitätskonstante der Spiralfeder ist;

$\alpha$ der Drehwinkel der Scheibe mit variablem Radius ist, ausgehend vom Zustand maximaler Wicklung des Kabels oder des drahtartigen Elementes auf der Scheibe (6, 6a) mit variablem Radius gemessen.

8. Vorrichtung nach einem oder mehreren der vorhergehenden Ansprüche, **dadurch gekennzeichnet, daß** bei Verwendung von N koaxialen Doppelscheiben (6, 6a), die auf die gleiche Welle (9, 9a) aufgekeilt und mit dem zu spannenden Kabel (3) mit Hilfe eines entsprechenden drahtartigen Elementes (8, 8a) verbunden sind, welches auf die entsprechende Scheibe (6, 6a) aufgewickelt werden kann, und bei Verwendung von n Spiralfedern (5, 5a), die um die Drehachse der Scheiben (6, 6a) mit variablem Radius herum angeordnet und parallel mit den Scheiben mit variablem Radius verbunden sind, der Radius (R) jeder Scheibe (6, 6a) mit variablem Radius durch die folgende Gleichung ausgedrückt wird:

$$R = \frac{\sum\limits_{i=l}^{i=n} (M_{0i} + K_i\alpha)}{F}$$

worin:

R der Radius der Scheibe mit variablem Radius ist;

F die auf das Kabel zu dessen Spannung zu übertragende Kraft ist, derart daß $N \cdot F = T$;

T die auf das Kabel aufgebrachte Spannung ist;

$M_{0i}$ die Vorspannung der i-ten Spiralfeder ist;

$K_i$ die Elastizitätskonstante der i-ten Spiralfeder ist;

$\alpha$ der Drehwinkel der Scheibe mit variablem Radius ist, ausgehend vom Zustand maximaler Wicklung jedes drahtartigen Elementes auf die entsprechende Scheibe mit variablem Radius gemessen.

9. Vorrichtung nach einem oder mehreren der vorhergehenden Ansprüche, **dadurch gekennzeichnet, daß** sie ein Paar von Doppelscheiben (6, 6a) mit variablem Radius aufweist, die auf die Welle (9, 9a) aufgekeilt und symmetrisch, seitlich oder auf entgegengesetzten Seiten bezüglich der Vertikalebene angeordnet sind, welche das gespannte Kabel (3) enthält; wobei das gespannte Kabel (3) mit einem seiner Enden mit einem Paar von drahtartigen Elementen (8, 8a) verbunden ist, von denen jedes auf einer der Scheiben (6, 6a) mit variablem Radius fixiert ist und auf die Scheibe (6, 6a) mit variablem Radius aufgewickelt werden kann.

10. Vorrichtung nach einem oder mehreren der vorhergehenden Ansprüche, **dadurch gekennzeichnet, daß** sie zwei Doppelspiralenfedern (5) aufweist, die um die Drehachse der zumindest einen Scheibe (6, 6a) mit variablem Radius herum angeordnet und parallel mit zumindest einer Scheibe mit variablem Radius verbunden sind, um der Drehung der zumindest einen Scheibe (6, 6a) mit variablem Radius in der Drehrichtung, welche das Abwickeln des Kabels (3) oder des entsprechenden drahtartigen Elementes (8, 8a) bewirkt, entgegenzuwirken.

11. Vorrichtung nach einem oder mehreren der vorhergehenden Ansprüche, **dadurch gekennzeichnet, daß** die zumindest eine Spiralfeder (5) eine Spiralfeder ist, die um die Welle (9) zwischen dem Paar von Doppelscheiben (6) mit variablem Radius herum angeordnet ist, welche an den axialen Enden der Welle (9) fixiert sind.

12. Vorrichtung nach einem oder mehreren der vorhergehenden Ansprüche, **dadurch gekennzeichnet, daß** die Tragstruktur (7) durch einen Mast (12) oder einen Balken gebildet ist.

13. Vorrichtung nach Anspruch 11, **dadurch gekennzeichnet, daß** die zumindest eine Spiralfeder (5) zumindest teilweise in dem Mast (12) oder Balken untergebracht ist.

14. Vorrichtung nach einem oder mehreren der vorhergehenden Ansprüche, **dadurch gekennzeichnet, daß** die Tragstruktur (7a) durch plattenartige Elemente gebildet ist, die untereinander in gabelartiger Konfiguration zusammengebaut sind, mit zwei Armen (18a), die miteinander durch ein Querelement (19a) verbunden sind und die Welle (9a) abstützen, so daß sie um ihre eigene Achse (26a) drehen kann.

15. Vorrichtung nach Anspruch 14, **dadurch gekennzeichnet, daß** die Tragstruktur (7a) mit einem Mast, einer Wand oder einem festen Verankerungselement bekannter Art in Eingriff versetzbar ist.

16. Vorrichtung nach einem oder mehreren der vorhergehenden Ansprüche, **dadurch gekennzeichnet, daß** die zumindest eine Spiralfeder (5a) von einem Gehäuse umgeben ist, das an der Tragstruktur (7a) fixiert ist; wobei die Spiralfeder (5a) mit einem ihrer Enden an diesem Gehäuse fixiert ist.

**Revendications**

1. Dispositif pour compenser les variations de longueur des câbles tendus, avec une tension sensiblement constante, comprenant un élément de contraste (2, 2a) qui est approprié pour être intercalé entre une extrémité du câble tendu (3) et un élément d'ancrage et est adapté pour générer une réaction élastique qui peut varier en fonction de la variation de longueur du câble tendu (3), des moyens de raccordement (4, 4a) étant prévus pour raccorder ledit élément de contraste (2, 2a) audit câble tendu (3), lesdits moyens de raccordement (4, 4a) étant adaptés pour convertir la réaction élastique dudit élément de contraste (2, 2a) en une tension sensiblement constante appliquée audit câble tendu (3), indépendamment de sa longueur, sur une plage de variations de longueur prédéterminée, lesdits moyens de raccordement (4, 4a) comprenant au moins une poulie à rayon variable (6, 6a) qui est supportée de sorte qu'elle peut tourner autour de son propre axe (26, 26a) grâce à une structure de support (7, 7a), ledit câble tendu (3) étant raccordé avec l'une de ses extrémités, directement ou au moyen d'un élément en forme de fil (8, 8a), à ladite poulie à rayon variable (6, 6a), ledit câble tendu (3) ou ledit élément en forme de fil (8, 8a) pouvant être enroulé sur ladite poulie à rayon variable (6, 6a), **caractérisé en ce que** ledit élément de contraste (2, 2a) comprend au moins un ressort hélicoïdal (5, 5a), et ledit au moins un ressort hélicoïdal (5, 5a) étant raccordé, avec l'une de ses extrémités, à ladite poulie à rayon variable (6, 6a) afin de s'opposer à sa rotation dans la direction qui déroule ledit câble tendu (3) ou ledit élément en forme de fil (8, 8a) à partir de ladite poulie à rayon variable (6, 6a) et avec son autre extrémité, à ladite structure de support (7, 7a).

2. Dispositif selon la revendication 1, **caractérisé en ce que** ledit au moins un ressort hélicoïdal (5, 5a) est agencé autour de l'axe de rotation (26, 26a) de ladite au moins une poulie à rayon variable (6, 6a) et est fixé, avec l'une de ses extrémités, à ladite poulie à rayon variable (6, 6a) et, avec son autre extrémité, à ladite structure de support (7, 7a).

3. Dispositif selon une ou plusieurs des revendications précédentes, **caractérisé en ce que** ladite poulie à rayon variable (6, 6a) est clavetée sur un arbre (9, 9a) qui est supporté de sorte qu'il peut tourner autour de son axe (26, 26a) grâce à ladite structure de support (7, 7a) et définit, avec son axe, l'axe de rotation de la poulie à rayon variable (6, 6a) ; ledit ressort hélicoïdal (5, 5a) étant agencé autour dudit arbre (9, 9a) et étant fixé, avec l'une de ses extrémités, audit arbre (9, 9a) et, avec son autre extrémité, à ladite structure de support (7, 7a).

4. Dispositif selon une ou plusieurs des revendications précédentes, **caractérisé en ce que** ladite structure de support (7, 7a) et ledit arbre (9, 9a) sont adaptés pour maintenir la distance entre les extrémités dudit au moins un ressort hélicoïdal (5, 5a) constante, tout en permettant à une extrémité du au moins un ressort hélicoïdal (5, 5a) de modifier sa position angulaire autour de l'axe (26, 26a) dudit arbre (9, 9a) par rapport à l'autre extrémité.

5. Dispositif selon une ou plusieurs des revendications précédentes, **caractérisé en ce que** ladite au moins une poulie à rayon variable (6, 6a) est prévue de manière périmétrale avec un chemin de roulement (11, 11a) pour contenir ledit câble tendu (3) ou ledit élément en forme de fil (8, 8a).

6. Dispositif selon une ou plusieurs des revendications précédentes, **caractérisé en ce que** ladite poulie à rayon variable (6, 6a) a un rayon (R) qui augmente lorsque l'angle d'enroulement dudit câble tendu (3) ou dudit élément en forme de fil (8, 8a) sur ladite poulie à rayon variable (6, 6a) diminue.

7. Dispositif selon une ou plusieurs des revendications précédentes, **caractérisé en ce que**, si l'on utilise une poulie unique (6, 6a) qui est raccordée au câble (3) à tendre directement ou au moyen d'un élément en forme de fil (8, 8a) qui peut être enroulé sur la poulie (6, 6a), on utilise un seul ressort hélicoïdal (5, 5a) qui est agencé autour de l'axe de rotation de la poulie à rayon variable (6, 6a) et est raccordé à la poulie à rayon variable (6, 6a), le rayon (R) de ladite au moins une poulie à rayon variable (6, 6a) est exprimé par la relation suivante :

$$R = (M_0 + K \cdot \alpha) / T$$

où :

R est le rayon de la poulie à rayon variable ;
T est la tension à transmettre au câble afin de le tendre ;
$M_0$ est le préchargement du ressort hélicoïdal ;
K est la constante élastique du ressort hélicoïdal ;
$\alpha$ est l'angle de rotation de la poulie à rayon variable, mesuré à partir de la condition d'enroulement maximum du câble ou de l'élément en forme de fil sur ladite poulie à rayon variable (6, 6a).

8. Dispositif selon une ou plusieurs des revendications précédentes, **caractérisé en ce que** si l'on utilise N poulies jumelées coaxiales (6, 6a) qui sont clavetées sur un même arbre (9, 9a) et sont raccordées au câble (3) à tendre au moyen d'un élément en forme de fil (8, 8a) correspondant qui peut être enroulé sur la poulie (6, 6a) correspondante et que l'on utilise n ressorts hélicoïdaux (5, 5a) qui sont agencés autour de l'axe de rotation des poulies à rayon variable (6, 6a) et sont raccordés en parallèle aux poulies à rayon variable, le rayon (R) de chaque poulie à rayon variable (6, 6a) est exprimé par la relation suivante :

$$R = \frac{\sum_{i=1}^{i=n}(M_{0i} + K_i\alpha)}{F}$$

où :

R est le rayon de la poulie à rayon variable ;

F est la force à transmettre au câble pour sa tension, de sorte que N • F = T ;

T est la tension à appliquer au câble ;

$M_{0i}$ est le préchargement du énième ressort hélicoïdal ;

$K_i$ est la constante élastique du énième ressort hélicoïdal ;

$\alpha$ est l'angle de rotation des poulies à rayon variable, mesuré à partir de la condition d'enroulement maximum de chaque élément en forme de fil sur la poulie à rayon variable correspondante.

9. Dispositif selon une ou plusieurs des revendications précédentes, **caractérisé en ce qu'**il comprend une paire de poulies jumelées à rayon variable (6, 6a) qui sont clavetées sur ledit arbre (9, 9a) et sont agencées de manière symétrique, latérale et sur des côtés mutuellement opposés par rapport au plan vertical qui contient ledit câble tendu (3) ; ledit câble tendu (3) étant raccordé, avec l'une de ses extrémités, à une paire d'éléments en forme de fil (8, 8a), dont chacun est fixé sur l'une desdites poulies à rayon variable (6, 6a) et peut être enroulé sur la poulie à rayon variable (6, 6a) correspondante.

10. Dispositif selon une ou plusieurs des revendications précédentes, **caractérisé en ce qu'**il comprend deux ressorts hélicoïdaux jumelés (5), qui sont agencés autour de l'axe de rotation de ladite au moins une poulie à rayon variable (6, 6a) et sont raccordés en parallèle à ladite au moins une poulie à rayon variable afin de s'opposer à la rotation de ladite au moins une poulie à rayon variable (6, 6a) dans la direction de rotation qui produit le déroulement du câble (3) ou de l'élément en forme de fil (8, 8a) correspondant.

11. Dispositif selon une ou plusieurs des revendications précédentes, **caractérisé en ce que** ledit au moins un ressort hélicoïdal (5) comprend un ressort hélicoïdal qui est agencé autour dudit arbre (9) entre ladite paire de poulies à rayon variable jumelées (6) fixées aux extrémités axiales dudit arbre (9).

12. Dispositif selon une ou plusieurs des revendications précédentes, **caractérisé en ce que** ladite structure de support (7) est constituée par un poteau (12) ou une poutre.

13. Dispositif selon la revendication 11, **caractérisé en ce que** ledit au moins un ressort hélicoïdal (5) est au moins partiellement logé à l'intérieur dudit poteau (12) ou poutre.

14. Dispositif selon une ou plusieurs des revendications précédentes, **caractérisé en ce que** ladite structure de support (7a) est constituée par des éléments en forme de plaque qui sont mutuellement agencés selon une configuration en forme de console avec deux bras (18a) qui sont assemblés l'un à l'autre par une traverse (19a) et supportent ledit arbre (9a) de sorte qu'il peut tourner autour de son propre axe (26a).

15. Dispositif selon la revendication 14, **caractérisé en ce que** ladite structure de support (7a) peut être mise en prise avec un poteau, une paroi ou un autre élément d'ancrage fixe d'un type connu.

16. Dispositif selon une ou plusieurs des revendications précédentes, **caractérisé en ce que** ledit au moins un ressort hélicoïdal (5a) est entouré par une enceinte qui est fixée sur ladite structure de support (7a) ; ledit ressort hélicoïdal (5a) étant fixé par l'une de ses extrémités à ladite enceinte.

*Fig. 1*

*Fig.2*

*Fig.3*

*Fig.4*

Fig.5

Fig. 6

Fig. 7

18

*Fig. 8*

*Fig. 9*

*Fig. 10*

*Fig. 11*

*Fig. 12*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9821794 A
- IT MI20061857 A